# EUROPÄISCHE PATENTSCHRIFT

(11) **EP 1 026 178 B1**
(45) Veröffentlichungstag und Bekanntmachung des Hinweises auf die Patenterteilung: **17.03.2004**
(21) Anmeldenummer: 00101309.3
(22) Anmeldetag: 22.01.2000
(51) Int. Cl.: C08F 8/06, C09D 17/00

(54) **Aminoxidgruppen enthaltende Maleinsäureanhydrid-Copolymere und ihre Verwendung als Dispergiermittel für Pigmente oder Füllstoffe**
Maleic anhydride copolymers containing amine oxide groups and use thereof as dispersants for pigments and fillers
Copolymères d'anhydride maléique contenant des groupements amino-oxyde et leur utilisation comme dispersants de pigments et de charges

(30) Priorität: 05.02.1999 DE 19904603
(43) Veröffentlichungstag der Anmeldung: 09.08.2000
(73) Patentinhaber: Goldschmidt AG, 45127 Essen (DE)
(72) Erfinder: Esselborn, Eberhard, 45147 Essen (DE); Gaikowski, Manfred, Dr., 06618 Naumburg (DE); Josten, Wolfgang, Dr., 53639 Königswinter (DE); Silber, Stefan, Dr., 47804 Krefeld (DE); Stüttgen, Andreas, 47167 Duisburg (DE); Reuter, Ellen, 45239 Essen (DE)

(56) Entgegenhaltungen:
- EP-A- 0 257 506
- EP-A- 0 636 640
- EP-A- 0 837 080
- WO-A-96/14347
- FR-A- 2 250 810
- FR-A- 2 283 156
- FR-M- 6 079
- US-A- 3 749 684
- US-A- 4 179 271

## Beschreibung

Die vorliegende Erfindung betrifft Aminoxidgruppen enthaltende Maleinsäureanhydrid-Copolymere und ihre Verwendung als Dispergiermittel für Pigmente oder Füllstoffe

Gemäß dem Stand der Technik werden als Dispergiermittel häufig Polyacrylsäureester mit sauren und/oder basischen Gruppen eingesetzt, die auch versalzt sein können, welche durch Polymerisation von entsprechenden monomeren Acrylsäureestern, wie zum Beispiel Butylacrylat, Acrylsäure, 2-Hydroxyethylacrylat und dessen Alkoxilierungsprodukten und anderen Monomeren mit vinylischen Doppelbindungen wie zum Beispiel Styrol oder Vinylimidazol hergestellt werden können (siehe zum Beispiel EP-B-0 311 157). Es finden sich aber auch Beschreibungen, wie durch Umesterungsreaktionen an polyacrylsäurealkylestern durch Austausch der Alkylgruppe im Sinne einer polymeranalogen Reaktion durch Alkohole oder Amine solche Dispergiermittel erzeugt werden können (siehe zum Beispiel EP-B-0 595 129, DE-C-39 06 702, EP-A-0 879 860). Vorteile der polymeranalogen Reaktionsführung sollen in einer engeren Molekulargewichtsverteilung und einer Freiheit von störenden oder toxischen Monomeranteilen liegen. Außerdem sollen so Polymere erzeugt werden können, die durch direkte Polymerisation mangels technischer Verfügbarkeit entsprechender polymerisierbarer Monomere nicht zugänglich sind. Solche Alkoholysen oder Aminolysen erfordern oft den Einsatz von im Regelfall stark sauren Katalysatoren wie zum Beispiel Schwefelsäure oder Paratoluolsulfonsäure oder Metallsalzen wie zum Beispiel Titanate, die bei den angegebenen Reaktionstemperaturen von bis zu 200 °C neben unerwünschten Nebenreaktionen, die Molekulargewichtsaufbau provozieren, auch oft stark gefärbte Produkte hervorbringen, die eben aufgrund ihrer Färbung für anspruchsvolle Dispergieraufgaben nicht oder nur schlecht geeignet sind.

Ganz analog macht man sich auch Polymere, die Diester radikalisch polymerisierbarer Dicarbonsäuren, wie zum Beispiel Maleinsäuredialkylester, enthalten, als Basis zur Herstellung von Dispergiermitteln zu nutze, wie dies zum Beispiel in WO 96/14347 ausgeführt ist. Hier wird zunächst eine Umesterung des Dicarbonsäurealkylesters mit einem hydroxyfunktionellen Polyoxyalkylen beschrieben, gefolgt von einer anschließenden Copolymerisation mit einem weiteren vinylisch ungesättigten Monomer. Nachteilig ist auch hier, daß der Umesterungsschritt, bei Anwesenheit vorzugsweise saurer Katalysatoren, Reaktionstemperaturen von ca. 160 °C erfordert, welche ebenfalls die oben genannten Nachteile mit Bezug auf die Verwendbarkeit der so gewonnenen Dispergiermittel mit sich bringen. Die daran anschließende Copolymerisation ist auf hohe Dosierungen kostspieliger, organischer Peroxide als Initiator angewiesen, um ausreichende Umsätze und reproduzierbare Copolymerisate zu erhalten. Im Regelfall bleiben trotzdem, insbesondere bei Verwendung von Monomeren mit Gewichtsmitteln des Molekulargewichts größer 500 g/Mol erhebliche Anteile unpolymerisierten Monomers im Reaktionsgemisch unumgesetzt zurück, welche auch nicht mehr wirtschaftlich entfernt werden können. Neben ökonomischen Nachteilen ist dies besonders aufgrund der potentiellen toxischen Eigenschaften, die radikalisch polymerisierbaren Vinylverbindungen zumeist innewohnt, unerwünscht. Außerdem sind die Produkte im Regelfall zudem nach der Copolymerisation nochmals stark nachgedunkelt. Dies schränkt mögliche Einsatzgebiete wiederum in hohem Maße ein.

Mit den oben beschriebenen, dem Stand der Technik gemäßen Dispergiermitteln können zudem die vielfältigen anwendungstechnischen Anforderungen, die insbesondere im Bereich hochwertiger Industrielackierungen, wie zum Beispiel der Automobilserienlackierung, nicht oder nicht'in vollem Umfang erfüllt werden. So verhindern immer wieder zum Teil sich gegenseitig bedingende Nachteile, wie zum Beispiel fehlende Kompatibilität zu diversen Bindemitteln, ausreichende Wirksamkeit nur bei sehr hohen Dosierungen des Dispergiermittels, zu lange Dispergierzeiten, zu niedrige erreichbare Pigmentierungshöhen, unzureichende Farbstärkeentwicklung, Viskositäts- und Farbtonkonstanz (insbesondere nach Lagerung) oder Flokkulation und Aggregation (auch zeitverzögert) aufgrund zu schwacher Stabilisierung der Pigmente durch das Dispergiermittel deren breiten Einsatz.

Der vorliegenden Erfindung liegt daher die Aufgabe zugrunde, eine Vielzahl der genannten Nachteile zu überwinden und neue Dispergiermittel bereitzustellen, die einfach hergestellt werden können und sich insbesondere durch außergewöhnlich gute anwendungstechnische Eigenschaften auszeichnen.

Überraschenderweise wurde gefunden, daß dem Stand der Technik überlegene, neue Dispergiermittel erhalten werden können, die die oben genannten Nachteile nicht aufweisen.

Dabei handelt es sich um Aminoxidgruppen enthaltende Maleinsäureanhydrid-Copolymere, welche dadurch erhältlich sind, daß man wenigstens 1 Mol-% der Anhydridgruppen von Maleinsäureanhydrid-Copolymeren mit
a) Diaminen aus der Gruppe

   HR¹N-R²-NR³R⁴

   wobei
   - R¹: ein Wasserstoffrest oder ein einwertiger Kohlenwasserstoffrest mit 1 bis 24 Kohlenstoffatomen ist,
   - R²: ein zweiwertiger Alkylenrest mit 2 bis 24 Kohlenstoffatomen ist und
   - R³ und R⁴: aliphatische und/oder alicyclische Alkylreste mit 1 bis 12, bevorzugt 1 bis 6 Kohlenstoffatomen sind, die gleich oder verschieden sein können
   umsetzt und anschließend zu Aminoxidgruppen der allgemeinen Formel (wie dem Fachmann geläufig, sollen die Wellenlinien andeuten, daß es sich hier und im folgenden bei dieser Darstellung lediglich um einen Ausschnitt einer polymeren Verbindung handelt) 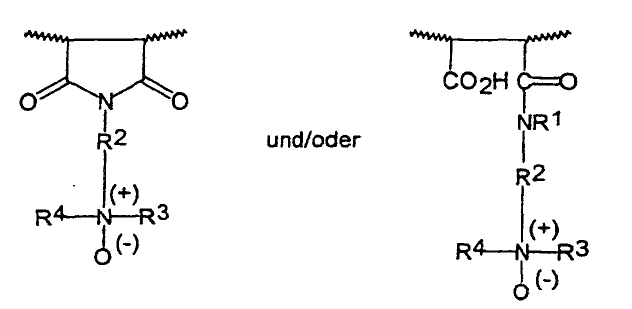 oxidiert, die restlichen Anhydridgruppen ganz oder teilweise mit
b) gesättigten oder ungesättigten, alicyclischen oder cyclischen Alkoholen und/oder Aminen der allgemeinen Formel

   HO-R¹ bzw. HR²N-R¹

   wobei
   - R¹: ein Kohlenwasserstoffrest mit 2 bis 24 Kohlenstoffatomen ist und
   - R²: ein Wasserstoffrest oder ein einwertiger Kohlenwasserstoffrest mit 1 bis 24 Kohlenstoffatomen ist
   und/oder
c) Polyoxyalkylenverbindungen der allgemeinen Formel

   H- (O-C₂H₄₋ₐR³ ₐ)_{b}(O-C_{c}H_{2c})_{d}O-R⁴,

   wobei
   - R³: gleiche oder verschiedene Alkylreste oder Alkylenreste mit 1..bis 24 Kohlenstoffatomen oder, gegebenenfalls substituierte, Phenylreste mit bis zu 24 Kohlenstoffatomen sind und
   - R⁴: ein Wasserstoffrest oder ein gesättigter oder ungesättigter, gegebenenfalls verzweigter oder cyclischer oder aromatischer Kohlenwasserstoffrest mit bis zu 24 Kohlenstoffatomen ist, der gegebenenfalls auch Heteroatome aus der Gruppe O, S, N, P, Si, F, Cl, Br, und I enthalten kann,
   a = 0 bis 3,
   b = 0 bis 100,
   c = 2 bis 12,
   d = 0 bis 100,
   und die Summe (b + d) = 2 bis 200 ist,
   wobei die Reihenfolge der Polyoxyalkylensegmente
   (O-C₂H₄₋ₐR³ₐ)_{b} und (O-C_{c}H_{2c})_{d} beliebig ist
   und/oder
d) Polyoxyalkylenverbindungen der allgemeinen Formel

   H₂N-R⁵-(O-C₂H₄₋ₐR³ ₐ)_{b}(O-C_{c}H_{2c})_{d}O-R⁶,
wobei
- R³: gleiche oder verschiedene Alkylreste oder Alkylenreste mit 1 bis 24 Kohlenstoffatomen oder, gegebenenfalls substituierte, Phenylreste mit bis zu 24 Kohlenstoffatomen sind,
- R⁵: ein zweiwertiger Alkylenrest mit 2 bis 6 Kohlenstoffatomen ist und
- R⁶: ein Wasserstoffrest oder ein gesättigter oder ungesättigter, gegebenenfalls verzweigter oder cyclischer oder aromatischer Kohlenwasserstoffrest mit bis zu 24 Kohlenstoffatomen ist, der gegebenenfalls auch Heteroatome aus der Gruppe O, S, N, P, Si, F, Cl, Br, und I enthalten kann,
a = 0 bis 3,
b = 0 bis 100,
c = 2 bis 12,
d = 0 bis 100,
und die Summe (b + d) = 2 bis 200 ist,
wobei die Reihenfolge der Polyoxyalkylensegmente (O-C₂H₄₋ₐR³ₐ)_{b} und (O-C_{c}H_{2c})_{d} beliebig ist umsetzt.

Der Index a kann dabei in einem Polyoxyalkylen verschiedene Werte annehmen. Damit soll ausgedrückt werden, daß geeignete Polyoxyalkylene sowohl zum Beispiel Homopolymere von Ethylenglykol, Copolymere von Ethylenglykol und 1,2-Propylenglykol, aber auch ein mehrfaches Copolymer aus mehr als zwei Monomeren, wie zum Beispiel Ethylenglykol, 1,2-Propylenglykol und 1,2-Butylenglykol, sein können. Unabhängig davon kann auch der Index c in einem Polyoxyalkylen verschiedene Werte annehmen, so daß zum Beispiel mehrfache Copolymere zusätzlich mit 1,4-Butylenglykol aufgebaut sein können und die Copolymere statistisch oder blockweise aufgebaut sein können.

Die erfindungsgemäßen Aminoxidgruppen enthaltenden Maleinsäureanhydrid-Copolymeren können als Comonomer zumindest ein weiteres, verschiedenes Monomer mit vinylischen Doppelbindungen, vorzugsweise ein Monomer aus der Gruppe Styrol, alkylierte Styrolverbindungen, (Meth)Acrylsäure, (Meth)-Acrylsäureester, Alkylvinylether, Vinylacetat, Itaconsäureester oder Mischungen von Monomeren aus dieser Gruppe enthalten.

Bevorzugt wird als Comonomer Styrol verwendet, wobei das molare Verhältnis Maleinsäureanhydrid zu Styrol zwischen 1 zu 1 und 1 zu 3 liegt.

Bevorzugt weisen die erfindungsgemäßen Aminoxidgruppen enthaltenden Maleinsäureanhydrid-Copolymeren ein Molekulargewicht M_{w} von 1000 bis 10 0000, vorzugsweise von 2500 bis 50 000 g/Mol auf.

Je nach gewünschten Eigenschaften können die im Polymer vorhandenen Carbonsäuregruppen zu Carboxylatsalzen neutralisiert werden.

Ein weiterer Gegenstand der Erfindung ist die Verwendung der Aminoxidgruppen enthaltenden Maleinsäureanhydrid-Copolymeren als Dispergiermittel für Pigmente oder Füllstoffe, insbesondere zur Herstellung von Pigmentkonzentraten, wobei das Dispergiermittel zusammen mit den zu dispergierenden Pigmenten und/oder Füllstoffen, gegebenenfalls in Gegenwart von organischen Lösemitteln und/oder Wasser, gegebenenfalls mit Bindemitteln und gegebenenfalls mit üblichen Lackhilfsstoffen homogenisiert wird.

Ebenfalls Gegenstand der Erfindung ist die Verwendung der erfindungsgemäßen Copolymeren zur Herstellung eines Überzugsmittels, wobei ein Bindemittel, gegebenenfalls ein Lösemittel, Pigmente und/oder Füllstoffe, das Dispergiermittel und gegebenenfalls Hilfsstoffe zusammen dispergiert werden.

Erfindungsgemäß wird somit eine neuartige Klasse an Dispergieradditiven mit unerwartet herausragenden Eigenschaften bereitgestellt.

Zur Verdeutlichung des Reaktionsablaufs und der dabei entstehenden Strukturen ist als Beispiel folgendes Formelschema zu sehen:

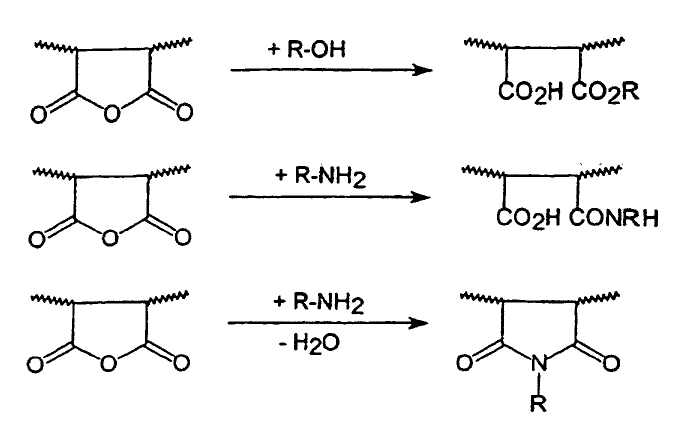

Es ist dem Fachmann geläufig, daß natürlich durch den Einsatz von Verbindungen, die mehr als nur eine zur nucleophilen Substitution an Anhydridgruppen befähigte funktionelle Gruppe enthalten, wie zum Beispiel Di- oder Trihydroxyverbindungen durch intermolekulare Reaktion an zwei oder mehr Anhydridgruppen, die also verschiedenen Maleinsäureanhydrid-Copolymeren zugehörig sind, ein Molekulargewichtsaufbau durch eine vernetzungsreaktion zwischen mindestens zwei Maleinsäureanhydrid-Copolymerketten erfolgen kann. Dies kann man sich gezielt zunutze machen und durch die Menge der zudosierten mehrfachfunktionellen Verbindung das Molekulargewicht des Gesamtmoleküls in weiten Grenzen steuern, um so spezielle Eigenschaften, wie zum Beispiel die Viskosität, gezielt einzustellen.

Die dem Fachmann bereits seit langem bekannten Dispergiereigenschaften der Maleinsäureanhydrid-Copolymere und ihrer durch Alkoholyse oder Aminolyse erhältlichen Derivate, wie sie beispielsweise unter anderem in JP 62 183 845, WO 97/15382 und EP-0 747 457 beschrieben sind, können durch Einführung über Halbamid- und/oder Imidgruppen gebundene Aminoxidgruppen entscheidend verbessert werden. Dies auch unter Beibehalt der ursprünglichen Vielfalt an strukturellen Variationsmöglichkeiten der Maleinsäureanhydrid-Copolymeren, die, wie dem Fachmann geläufig ist, durch Reaktion mit unterschiedlichsten Nucleophilen, den eingangs erwähnten Alkoholyse- bzw. Aminolyseprodukten von Acrylsäurealkylester-Polymeren in ihrer Vielfalt zumindest gleichgestellt sind, aber anwendungstechnisch deutliche Vorzüge bieten.

Daß bereits eine vergleichsweise geringe Modifizierung der Maleinsäureanhydrid-Copolymeren ab 1 Mol-% pro Anhydrid gruppe mit über Halbamid- und/oder Imidgruppen gebundenen Aminoxidgruppen der oben angegebenen allgemeinen Formel eine deutliche Verbesserung der Dispergiereigenschaften mit sich bringt, ist überraschend, da eine die Dispergierung fördernde Eigenschaft von Aminoxiden für Pigmente oder Füllstoffe kaum bekannt ist. Hier zeigt sich, daß Aminoxide offensichtlich besonders gut befähigt sind, mit verschiedensten Pigmentoberflächen in Wechselwirkung zu treten und somit für eine möglichst verläßliche Adsorption des Dispergiermittels auf der Pigmentoberfläche zu sorgen. Aminoxide wirken somit als besonders effektive, sogenannte "Ankergruppen", wie dies zum Beispiel für Carbonsäuregruppen bereits seit langem auch quantitativ beschrieben ist (siehe zum Vergleich L. Dintenfass, JOCCA, 41 (1958) 125); eine Übersicht über weitere Ankergruppen, die verschiedenen Mechanismen sowie weiterführende Literatur findet sich in J.D. Schofield, Polymeric Dispersants, in Handbook of coatings additives, Vol. 2, 1. Auflage (L.J.I. Calbo, Hrsg.), Marcel Dekker, New York (1992) 71.

Aminoxide selbst sind gemäß dem Stand der Technik jedoch lediglich im Regelfall in Form von bzw. in Kombination mit betainischen Verbindungen (sogenannten "inneren Salzen") als die Dispergierung förderndes Mittel beschrieben, wie in JP 63 095 277 (für Aluminium in Druckfarben), US-A-4 486 405 (für Metalloxide in kosmetischen Formulierungen), DE-B-25 46 810 (für Füllstoffe in Epoxidsystemen) und DE-B-16 44 193 (Nachbehandlung von Azofarbstoffen) dargelegt wird.

Die als Grundrohstoff verwendeten Maleinsäureanhydrid-Copolymere sind kommerziell erhältlich (Fa. Leuna-Harze GmbH, D-06236 Leuna) oder können nach dem Stand der Technik üblichen Methoden durch radikalische Polymerisation von Maleinsäureanhydrid mit wenigstens 100 Mol-% eines weiteren verschiedenen Monomers mit vinylischen Doppelbindungen, vorzugsweise ein Monomer aus der Gruppe Styrol, alkylierte Styrolverbindungen, (Meth)Acrylsäure, (Meth)Acrylsäureester, Alkylvinylether, Vinylacetat, Itaconsäureester oder Mischungen von Monomeren aus dieser Gruppe leicht erhalten werden. Besonders geeignet ist Styrol als Comonomer, wenn das molare Verhältnis Maleinsäureanhydrid zu Styrol zwischen 1 zu 1 und 1 zu 3 liegt. Derartige Copolymere sind schon seit den vierziger Jahren dieses Jahrhunderts intensiv erforscht worden und seit dieser Zeit kontinuierlich untersucht worden, wie zum Beispiel S.D. Baruah, N.C. Laskar, J. Appl. Polym. Sci. (1996), 60, 649 und US-A-4 180 637 zeigen.

Die Reaktion der Anhydridgruppen mit den aufgeführten Amino- und/oder Hydroxyverbindungen kann sowohl unter Zugabe von Lösemitteln und Katalysatoren als auch ohne zusätzliche Lösemittel und Katalysatoren durchgeführt werden. Im Einzelfall ist aber die Verwendung von basischen Katalysatoren wie tertiären Aminen mit geringer Nucleophilie von Vorteil. In Abhängigkeit der gewählten Temperatur und besonders vorteilhaft unter Ausnutzung eines Temperaturgradienten kann gezielt die bevorzugte Bildung von Halbamiden und Imiden eingestellt werden, wobei sich die Halbamide (Additionsreaktion) schon bei Raumtemperatur bilden, während für die Synthese der Imide (Kondensationsreaktion) je nach Reaktionskomponente, Lösemittel und Versuchsaufbau bevorzugt Temperaturen ab 80 °C notwendig sind:

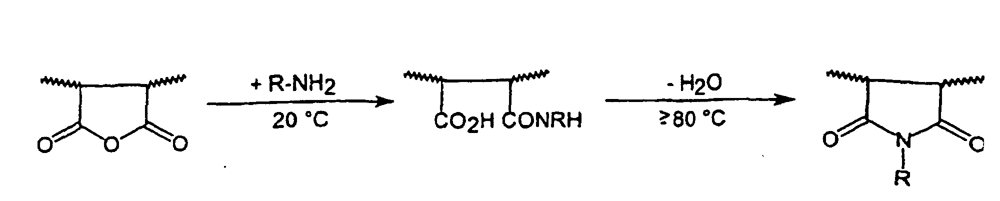

Die Herstellung der erfindungsgemäßen Aminoxide kann dann nach literaturbekannten Verfahren mittels einfacher Oxidation mit wäßriger Wasserstoffperoxidlösung bei moderaten Temperaturen erfolgen. Dabei werden die erfindungsgemäß im Molekül enthaltenen anderen Strukturelemente bzw. funktionellen Gruppen nicht beeinträchtigt. Die Reaktion ist nachfolgend exemplarisch an einem erfindungsgemäßen Maleinimidderivat dargestellt:

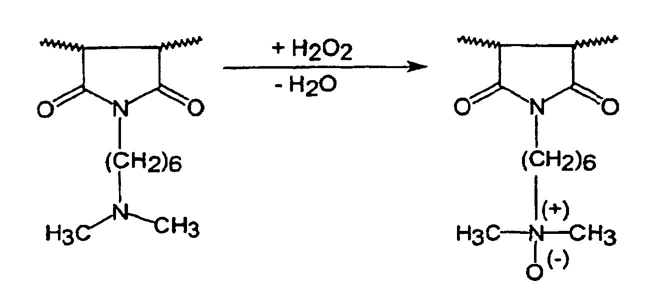

Es ist dem Fachmann geläufig, daß je nach Reaktionsbedingungen bei Anwesenheit von Wasser ebenfalls, zumindest teilweise, die analogen Aminoxidhydrate der erfindungsgemäßen Aminoxide gebildet werden können. Deren mögliches Vorkommen in den erfindungsgemäßen Dispergiermitteln bedarf deshalb keiner weiteren speziellen Erwähnung und ist mit der Verwendung des Terminus "Aminoxid" somit ausreichend deutlich gemacht und beschrieben.

### Herstellungsbeispiele

### Allgemeine Herstellvorschrift

Ein Maleinsäureanhydrid-Copolymer (Copolymerisat aus Maleinsäureanhydrid und Styrol; Fa. Leuna Harze GmbH) mit einer Säurezahl von 335 mg KOH/g und einem Molekulargewichtsmittel von M_{w} = 10 000 bis 20 000 g/Mol wird in einem Methylethylketon/Methylisobutylketon-Gemisch (Mischungsverhältnis 20 zu 80 Gew.-%) gelöst und mit einem Gemisch aus einem monohydroxyfunktionellen Polyoxyalkylen (Copolymer aus Ethylenoxid und Propylenoxid mit 25 Gew.-% Propylenoxid, Hydroxylzahl 34 mg KOH/g, Viskosität 300 mPas/25 °C), einem aminofunktionellen Polyoxyalkylen (Jeffamin M 2070; Fa. Texaco Chemical Company) sowie mit N,N-Dimethylaminopropylamin im gewünschten Molverhältnis, bezogen auf die Anhydridgruppen des Maleinsäureanhydrid-Copolymeren, gemischt. Unter Druck erhitzt man diese Mischung für 4 Stunden. Bei einer gewünschten Säurezahl des resultierenden Produkts wird die Reaktion abgebrochen. Das Lösungsmittel wird durch Destillation entfernt. Man erhält eine hellgelbe, mittelviskose, klare Flüssigkeit.

40 g des so erhaltenen hellgelben, mittelviskosen Reaktionsproduktes werden mit 60 g Wasser verdünnt, mit 0,1 Gew.-% Ethylendiamintetraacetat (EDTA) versetzt und auf 70 °C erhitzt. Nach Zugabe von 1,5 g 30 %iger wäßriger Wasserstoffperoxid-Lösung wird 8 Stunden gerührt. Anschließend wird auf 100 °C erhitzt und überschüssiges. Peroxid in 4 Stunden verkocht.

Das Endprodukt ist ebenfalls hellgelb, niedrigviskos und klar.

Gemäß dieser Vorschrift sind die folgenden 8 Herstellungsbeispiele hergestellt worden. Die Herstellungsbeispiele 1 bis 5 sind dabei erfindungsgemäß nach der angegebenen Vorschrift unter Ausbildung von über Halbamidund/oder Imidgruppen gebundenen Aminoxidgruppen synthetisiert worden. Bei den Herstellungsbeispielen 6 bis 8 (nicht erfindungsgemäß) ist dagegen keine Ausbildung von über Halbamid- und/oder Imidgruppen gebundenen Aminoxidgruppen erfolgt.

| Herstellungsbeispiel | Monohydroxyfunktionelles Polyoxyalkylen [Mol-%] | Jeffamin M 2070 [Mol-%] | N,N-Dimethylaminopropylamin [Mol-%] | Reaktionstemperatur [°C] | Säurezahl am Reaktionsende [mg KOH/g] |
|---|---|---|---|---|---|
| 1 | 20 | 10 | 10 | 150 | 65 |
| 2 | 40 | 0 | 15 | 150 | 47 |
| 3 | 10 | 20 | 20 | 150 | 48 |
| 4 | 20 | 20 | 10 | 150 | 44 |
| 5 | 25 | 25 | 5 | 150 | 36 |
| 6 | 50 | 0 | 0 | 135 | 63 |
| 7 | 0 | 50 | 0 | 150 | 32 |
| 8 | 25 | 25 | 0 | 150 | 39 |

### Anwendungsbeispiele

Zur Herstellung wäßriger Pigmentpasten werden 0,1 bis 100 Gew.-% der erfindungsgemäßen Maleinsäureanhydrid-Copolymere, vorzugsweise 0,5 bis 50 Gew.-% (bezogen auf das Gewicht der Pigmente), verwendet. Die erfindungsgemäßen Copolymere können entweder vorab mit den zu dispergierenden Pigmenten vermischt werden oder direkt dem Dispergiermedium (Wasser, eventuelle Glykolether-Zusätze) vor oder gleichzeitig mit der Zugabe der Pigmente und etwaiger anderer Feststoffe gelöst werden.

Wäßrige, hochkonzentrierte, pump- und fließfähige Pigmentpräparationen sind in einfacher Weise dadurch herzustellen, daß man das zu verwendende Polymer, gegebenenfalls in Kombination mit mindestens einer weiteren Komponente, mit Wasser vermischt, in dieser Mischung das Pigment unter Rühren einstreut und bis zur Erzielung der gewünschten Feinheit und Konsistenz der Suspension dispergiert.

Eine weitere Methode zur Herstellung der Pigmentpräparationen besteht darin, ein Pigment mit den erfindungsgemäßen Copolymeren zunächst trocken zu vermischen, woraus eine pulverförmige Pigmentzubereitung resultiert. Diese kann bei Bedarf in Wasser dispergiert werden, wobei die erfindungsgemäße Pigmentpräparation erhalten wird.

Eine dritte Methode zur Herstellung wäßriger, hochkonzentrierter, pump- und fließfähiger Pigmentsuspensionen und - pasten besteht darin, einen wäßrig-feuchten Pigmentfilterkuchen mit dem erfindungsgemäßen Copolymer zu versetzen und beispielsweise mit einem Dissolver in den Pigmentfilterkuchen einzuarbeiten, wobei dieser sich verflüssigt.

Als Beispiele für zu dispergierende Pigmente seien genannt:
- - Monoazopigmente:: C.I. Pigment Brown 25;
C.I. Pigment Orange 5, 36 und 67;
C.I. Pigment Red 1, 2 ,3 ,48:4, 49, 52:2, 53, 57:1, 251, 112, 170 und 184;
C.I. Pigment Yellow 1, 3, 73, 74, 65, 97, 151 und 183;
- - Diazopigmente:: C.I. Pigment Orange 34;
C.I. Pigment Red 144 und 166
C.I. Pigment Yellow 12, 13, 17, 83, 113 und 126;
- - Anthrachinonpigmente:: C.I. Pigment Yellow 147 und 177;
C.I. Pigment Violet 31;
- - Anthrapyrimidinpigmente:: C.I. Pigment Yellow 108;
- - Chinacridonpigmente:: C.I. Pigment Red 122, 202 und 20;
C.I. Pigment Violet 19;
- - Chinophthalonpigmente:: C.I. Pigment Yellow 138;
- - Dioxazinpigmente:: C.I. Pigment Violet 23 und 27;
- - Flavanthronpigmente:: C.I. Pigment Yellow 24;
- - Indanthronpigmente:: C.I. Pigment Blue 60 und 64;
- - Isoindolinpigmente:: C.I. Pigment Orange 69;
C.I. Pigment Red 260;
C.I. Pigment Yellow 139;
- - Isoindolinonpigmente:: C.I. Pigment Orange 61;
C.I. Pigment Red 257 und 260;
C.I. Pigment Yellow 109, 110, 173 und 185;
- - Metallkomplexpigmente:: C.I. Pigment Yellow 117 und 153;
- - Perinonpigmente:: C.I. Pigment Orange 43;
C.I. Pigment Red 194;
- - Perylenpigmente:: C.I. Pigment Black 31 und 32;
C.I. Pigment Red 123, 149, 178, 179, 190 und 224;
C.I. Pigment Violet 29;
- - Phtalocyaninpigmente:: C.I. Pigment Blue 15, 15:1, 15:2,15:3, 15:4, 15:6 und 16;
C.I. Pigment Green 7 und 36;
- - Pyranthronpigmente:: C.I. Pigment Orange 51;
C.I. Pigment Red 216;
- - Thioindigopigmente:: C.I. Pigment Red 88;
- - Triphenylmethanpigmente:: C.I. Pigment Blue 1, 61 und 62;
C.I. Pigment Green 1;
C.I. Pigment Red 81 und 169;
C.I. Pigment Violet 2 und 3;

- C.I. Pigment Black 1 (Anilinschwarz)
- C.I. Pigment Yellow 101 (Aldazingelb)

Anorganische Pigmente:
- - Weißpigmente:: Titandioxid (C.I. Pigment White 6), Zinkweiß, Farbenzinkoxid; Zinksulfid, Lithopone; Bleiweiß;
- Schwarzpigmente :: Eisenoxidschwarz (C.I. Pigment Black 11), Eisen-Mangan-Schwarz, Spinellschwarz (C.I. Pigment Black 27); Ruß (C.I. Pigment Black 7);
- - Buntpigmente:: Chromoxid, Chromoxidhydratgrün; Chromgrün (C.I. Pigment Green 48); Cobaltgrün (C.I. Pigment Green 50); Ultramaringrün; Kobaltblau (C.I. Pigment Blue 28 und 36); Ultramarinblau; Eisenblau (C.I. Pigment Blue 27); Manganblau;
Ultramarinviolett; Kobalt- und Manganviolett;
Eisenoxidrot (C.I. Pigment Red 101); Cadmiumsulfoselenid (C.I. Pigment Red 108); Molybdatrot (C.I. Pigment Red 104); Ultramarinrot;
Eisenoxidbraun, Mischbraun, Spinell- und Korundphasen (C.I. Pigment Brown 24, 29 und 31); Chromorange;
Eisenoxidgelb (C.I. Pigment Yellow 42); Nickeltitangelb (C.I. Pigment Yellow 53; C.I. Pigment Yellow 157 und 164); Chromtitangelb, Cadmiumsulfid und Cadmiumzinksulfid, (C.I. Pigment Yellow 37 und 35); Chromgelb (C.I. Pigment Yellow 34), Zinkgelb, Erdalkalichromate, Neapelgelb, Bismutvanadat (C.I. Pigment Yellow 184);
- - Glanzpigmente:: Metalleffektpigmente auf Basis metalloxidbeschichteter Metallplättchen; Perlglanzpigmente auf der Basis metalloxidbeschichteter Glimmerplättchen.

Füllstoffe, die beispielsweise in wäßrigen Lacken dispergiert werden können, sind z. B. solche auf Basis von Kaolin, Talkum, anderen Silikaten, Kreide, Glasfasern, Glasperlen oder Metallpulvern.

Als Lacksysteme, in denen die erfindungsgemäßen Pigmentpräparationen aufgelackt werden können, kommen beliebige wäßrige 1K- oder 2K-Lacke in Betracht. Beispielhaft genannt seien wäßrige IK-Lacke, wie beispielsweise solche auf Basis von Alkyd-, Acrylat-, Epoxid-, Polyvinylacetat-, Polyester- oder Polyurethanharzen, oder wäßrige 2K-Lacke, beispielsweise solche auf Basis von hydroxylgruppenhaltigen Polyacrylat- oder Polyesterharzen mit Melaminharzen oder gegebenenfalls blockierten Polyisocyanatharzen als Vernetzer. In gleicher Weise seien auch Polyepoxidharzsysteme genannt.

Wasser ist das bevorzugte Lösemittel für die erfindungsgemäßen Copolymere. Aber auch organische Lösemittel, wie beispielsweise Glykolether oder -ester, können allein oder im Gemisch mit Wasser verwendet werden. Insbesondere für das Antrocknungsverhalten der mittels der erfindungsgemäßen Copolymere hergestellten Pigmentpasten ist der Zusatz von Lösemitteln vielfach vorteilhaft.

Zur Herstellung der erfindungsgemäßen Pigmentpasten kann zudem auch der Zusatz weiterer nichterfindungsgemäßer, wasserdispergierbarer Polymerer, wie beispielsweise von Polyacrylat-, Polyurethan- oder Polysiloxanderivaten erfolgen.

Bei der Herstellung der erfindungsgemäßen Pigmentkonzentrate können zudem weitere Hilfsmittel, wie Entschäumer, Konservierungshilfsmittel, Netzmittel, Entlüfter oder dem Stand der Technik entsprechende Anti-Settling-Mittel, Wachse oder Rheologieadditive Verwendung finden.

### Herstellung der Pigmentpasten

Zur Herstellung der Pigmentpasten werden die erfindungsgemäßen (1 bis 5) und nichterfindungsgemäßen (6 bis 8) Dispergieradditive, 40 %ig in Wasser vorgelöst, mit Wasser und Hilfsstoffen gemischt und danach die Pigmente zugegeben. Die Dispergierung erfolgt nach Zugabe von Mahlkörpern (Glaskugeln 2 bis 3 mm, gleiches Volumen wie die Pigmentpaste) 1 (Titandioxid) bzw. 2 h (sonstige Pigmente) in einem Skandex-Rüttler mit Luftkühlung.

### Formulierung der Weißpasten

Die Weißpasten werden wie folgt formuliert (Angaben in Gew.-%) :

| | |
|---|---|
| 16,4 | Wasser |
| 12,3 | Additiv-Lösung, 40%ig |
| 1,0 | Entschäumer (z. B. Tego Foamex LA-E 455, Tego Chemie Service GmbH) |
| 70,0 | Titandioxid 2160 (Kronos) |
| 0,3 | Aerosil A 200 (Degussa) |

### Formulierung der Schwarzpasten

Die Schwarzpasten werden wie folgt formuliert (Angaben in Gew.-%):

| | |
|---|---|
| 60,3 | Wasser |
| 22,3 | Additiv-Lösung, 40 %ig |
| 1,0 | Entschäumer (z. B. Tego Foamex LA-E 455, Tego Chemie Service GmbH) |
| 1,4 | AMP 90 (Angus) |
| 15,0 | Farbruß FW 200 (Degussa) |

### Formulierung der Rotpasten

Die Rotpasten werden wie folgt formuliert (Angaben in Gew.-%):

| | |
|---|---|
| 57,0 | Wasser |
| 18,0 | Additiv-Lösung, 40 %-ig |
| 1,0 | Entschäumer (z. B. Tego Foamex LA-E 455, Tego Chemie Service GmbH) |
| 24,0 | Paliogenrot 3885 (BASF) |

### Formulierung der Blaupasten

Die Blaupasten werden wie folgt formuliert (Angaben in Gew.-%):

| | |
|---|---|
| 29,0 | Wasser |
| 35,0 | Additiv-Lösung, 40 %-ig |
| 1,0 | Entschäumer (z. B. Tego Foamex LA-E 455, Tego Chemie Service GmbH) |
| 35,0 | Heliogenblau 7101 (BASF) |

### Prüflacke

### Dispersions-Klarlack A

- 97,0: Neocryl XK 90 (Zeneca)
- 3,0: Texanol (Eastman)

### Dispersions-Klarlack B

- 100,0: Daotan VTW 1225 (Clariant)

Zur Herstellung mischpigmentierter Lacke werden je 40,0 g Klarlack vorgelegt, Weißpaste und Buntpaste im Verhältnis 25 : 1 (fest auf fest) zugegeben und 3 Minuten manuell mit einem Pinsel homogenisiert. Die Proben werden mit 100 µm Naßfilmdicke auf Kontrastkarten aufgerakelt und bei Raumtemperatur getrocknet (Dispersionslack).

### Test der Pastenstabilitäten:

Zur Ermittlung der Pastenstabilitäten werden bei zwei verschiedenen Schergefällen (20 1/s sowie 1000 1/s) die erreichbaren Anfangsviskositäten sowie die Viskositäten nach vierwöchiger Lagerung bei 50 °C bestimmt.

### Weißpasten

| Probe | Viskosität/Pas sofort bei 20 l/s | Viskosität/Pas sofort bei 1000 l/s | Viskosität/Pas nach 4 Wo 50 °C bei 20/ ls | Viskosität/Pas nach 4 Wo 50 °C bei 1000 l/s |
|---|---|---|---|---|
| 1 | 0,64 | 0,18 | 0,82 | 0,30 |
| 2 | 0,58 | 0,17 | 0,73 | 0.29 |
| 3 | 0,53 | 0,15 | 0,72 | 0,30 |
| 4 | 0,61 | 0,19 | 0,69 | 0,27 |
| 5 | 0,65 | 0,15 | 0,77 | 0,34 |
| 6 | 0,79 | 0,12 | 1,46 | 0,58 |
| 7 | 0,72 | 0,15 | 1,23 | 0,53 |
| 8 | 0,75 | 0,18 | 1,62 | 0,48 |

### Schwarzpasten

| Probe | Viskosität/dPas sofort bei 20 l/s | Viskosität/dPas sofort bei 1000 l/s | Viskosität/dPas nach 4 Wo 50°C bei 20 l/s | Viskosität/dPas nach 4 Wo 50 °C bei 1000 l/s |
|---|---|---|---|---|
| 1 | 0,58 | 0,33 | 0,79 | 0,40 |
| 2 | 0,62 | 0,34 | 0,77 | 0,50 |
| 3 | 0,65 | 0,29 | 0,72 | 0,48 |
| 4 | 0,55 | 0,31 | 0,79 | 0,49 |
| 5 | 0,59 | 0,29 | 0,78 | 0,50 |
| 6 | 0,72 | 0,29 | 1,24 | 0,53 |
| 7 | 0,77 | 0,31 | 1,30 | 0,56 |
| 8 | 0,81 | 0,33 | 1,33 | 0,60 |

### Rotpasten

| Probe | Viskosität/dPas sofort bei 20 l/s | Viskosität/dPas sofort bei 1000 l/s | Viskosität/dPas nach 4 Wo 50°C bei 20 l/s | Viskosität/dPas nach 4 Wo 50 °C bei 1000 l/s |
|---|---|---|---|---|
| 1 | 0,62 | 0,40 | 0,75 | 0,73 |
| 2 | 0,58 | 0,37 | 0,80 | 0.59 |
| 3 | 0,64 | 0,48 | 0,79 | 0,61 |
| 4 | 0,66 | 0,49 | 0,90 | 0,70 |
| 5 | 0,56 | 0,42 | 0,70 | 0,60 |
| 6 | 0,84 | 0,39 | 1,54 | 0,86 |
| 7 | 0,91 | 0,54 | 1,58 | 0,79 |
| 8 | 0,88 | 0,49 | 1,62 | 0,84 |

### Blaupasten

| Probe | Viskosität/dPas sofort bei 20 l/s | Viskosität/dPas sofort bei 1000 l/s | Viskosität/dPas nach 4 Wo 50°C bei 20 l/s | Viskosität/dPas nach 4 Wo 50 °C bei 1000 l/s |
|---|---|---|---|---|
| 1 | 0,54 | 0,36 | 0,70 | 0,49 |
| 2 | 0,56 | 0,29 | 0,59 | 0,41 |
| 3 | 0,49 | 0,31 | 0,65 | 0,45 |
| 4 | 0,59 | 0,41 | 0,74 | 0,55 |
| 5 | 0,50 | 0,33 | 0,57 | 0,44 |
| 6 | 0,84 | 0,29 | 1,39 | 0,86 |
| 7 | 0,83 | 0,31 | 1,42 | 0,91 |
| 8 | 0,91 | 0,39 | 1,36 | 0,90 |

Aus dem jeweils nur geringen Viskositätsanstieg läßt sich die gute Stabilität der erfindungsgemäßen Pigmentpasten leicht erkennen.

### Test der Dispergiereigenschaften

Die Testformulierungen werden mit 100 µm Naßfilmdicke aufgezogen; nach sechsminütiger Trocknung erfolgt ein Rub-Out-Test auf 1/3 der beschichteten Fläche. Nach Trocknung über Nacht erfolgt nach jeweils 24 Stunden die farbmetrische Vermessung der Aufzüge mittels eines Spektralphotometers Typ XP 68 der Firma X-Rite. Die Bestimmungen von Glanzgrad und -schleier erfolgen mittels des Haze-Gloss-Gerätes der Firma Byk-Gardner.

### Dispersionslack auf Basis Neocryl XK 90 (grau)

| Probe | Helligkeit L | Delta E nach Rub-Out | Glanzgrad (60°-Winkel) | Haze |
|---|---|---|---|---|
| 1 | 44,62 | 0,31 | 74,5 | 135 |
| 2 | 45,87 | 0,89 | 75,9 | 120 |
| 3 | 42,61 | 0,54 | 75,7 | 128 |
| 4 | 45,44 | 0,68 | 72,7 | 118 |
| 5 | 45,86 | 0,72 | 73,7 | 132 |
| 6 | 49,42 | 2,13 | 70,1 | 196 |
| 7 | 50,41 | 1,67 | 68,1 | 172 |
| 8 | 54,66 | 1,39 | 69,9 | 268 |

### Dispersionslack auf Basis Neocryl XK 90 (blau)

| Probe | -b | Delta E nach Rub-Out | Glanzgrad (60°-Winkel) | Haze |
|---|---|---|---|---|
| 1 | 33,66 | 0,49 | 73,1 | 131 |
| 2 | 33,92 | 0,93 | 77,2 | 145 |
| 3 | 33,31 | 0,79 | 75,6 | 141 |
| 4 | 31,58 | 0,90 | 76,7 | 149 |
| 5 | 32,70 | 0,83 | 74,5 | 151 |
| 6 | 34,33 | 1,45 | 70,7 | 168 |
| 7 | 34,01 | 1,39 | 40,0 | 201 |
| 8 | 34,75 | 1,79 | 71,0 | 170 |

### Dispersionslack auf Basis Daotan VTW 1225 (grau)

| Probe | Helligkeit L | Delta E nach Rub-Out | Glanzgrad (60°-Winkel) | Haze |
|---|---|---|---|---|
| 1 | 39,62 | 1,79 | 74,2 | 201 |
| 2 | 44,81 | 1,89 | 77,5 | 274 |
| 3 | 37,33 | 1,97 | 74,7 | 196 |
| 4 | 40,50 | 1,76 | 75,9 | 244 |
| 5 | 43,44 | 1,60 | 73,4 | 238 |
| 6 | 48,75 | 6,08 | 65,3 | 368 |
| 7 | 49,30 | 3,29 | 59,9 | 318 |
| 8 | 46,12 | 5,65 | 61,2 | 322 |

### Dispersionslack auf Basis Daotan VTW 1225 (blau)

| Probe | -b | Delta E nach Rub-Out | Glanzgrad (60°-Winkel) | Haze |
|---|---|---|---|---|
| 1 | 35,67 | 2,72 | 78,8 | 157 |
| 2 | 36,76 | 2,37 | 78,4 | 144 |
| 3 | 37,27 | 3,14 | 80,2 | 165 |
| 4 | 35,89 | 1,95 | 81,1 | 182 |
| 5 | 35,79 | 2,89 | 79,3 | 153 |
| 6 | 41,79 | 7,92 | 48,3 | 232 |
| 7 | 42,04 | 6,18 | 72,7 | 215 |
| 8 | 40,32 | 6,54 | 58,7 | 207 |

Zu erkennen ist die durch den Einsatz der Dispergieradditive erzielbare günstigere Farbstärkenentwicklung sowie der in allen Fällen günstige Rub-Out-Test, hervorgerufen durch die zusätzliche Polymerverankerung der Aminoxidgruppen auf der Pigmentoberfläche.

Wie aus den vorhergehenden Vergleichen ersichtlich ist, zeichnen sich die erfindungsgemäßen Verbindungen durch ihre universelle Anwendbarkeit, die leichte Herstellbarkeit stabiler Pigmentpasten, erzielbare Pigmentierungshöhen, erreichbare Farbtonstabilitäten und ihre sehr universelle Verwendung aus.

## Patentansprüche

1. Aminoxidgruppen enthaltende Maleinsäureanhydrid-Copolymere, dadurch erhältlich, daß man wenigstens 1 Mol-% der Anhydridgruppen von Maleinsäureanhydrid-Copolymeren mit
a) Diaminen aus der Gruppe
HR¹N-R²-NR³R⁴
wobei
R¹ ein Wasserstoffrest oder ein einwertiger Kohlenwasserstoffrest mit 1 bis 24 Kohlenstoffatomen ist,
R² ein zweiwertiger Alkylenrest mit 2 bis 24 Kohlenstoffatomen ist und
R³ und R⁴ aliphatische und/oder alicyclische Alkylreste mit 1 bis 12, bevorzugt 1 bis 6 Kohlenstoffatomen sind, die gleich oder verschieden sein können,
umsetzt und anschließend zu Aminoxidgruppen der allgemeinen Formel 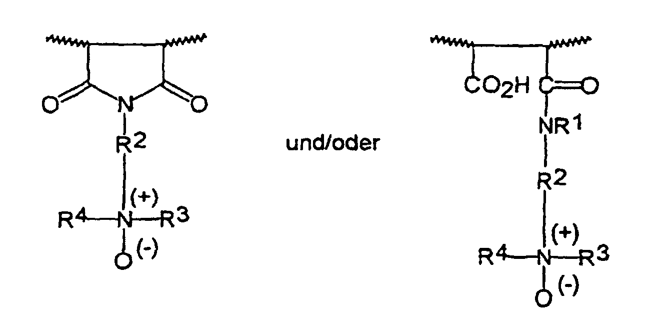 oxidiert, die restlichen Anhydridgruppen ganz oder teilweise mit
b) gesättigten oder ungesättigten, alicyclischen oder cyclischen Alkoholen und/oder Aminen der allgemeinen Formel
HO-R¹ bzw. HR²N-R¹
wobei
R¹ ein Kohlenwasserstoffrest mit 2 bis 24 Kohlenstoffatomen ist und
R² ein Wasserstoffrest oder ein einwertiger Kohlenwasserstoffrest mit 1 bis 24 Kohlenstoffatomen ist,
und/oder
c) Polyoxyalkylenverbindungen der allgemeinen Formel
H- (O-C₂H₄₋ₐR³ ₐ)_{b}(O-C_{c}H_{2c})_{d}O-R⁴
wobei
R³ gleiche oder verschiedene Alkylreste oder Alkylenreste mit 1 bis 24 Kohlenstoffatomen oder, gegebenenfalls substituierte, Phenylreste mit bis zu 24 Kohlenstoffatomen sind und
R⁴ ein Wasserstoffrest oder ein gesättigter oder ungesättigter, gegebenenfalls verzweigter oder cyclischer oder aromatischer Kohlenwasserstoffrest mit bis zu 24 Kohlenstoffatomen ist, der gegebenenfalls auch Heteroatome aus der Gruppe O, S, N, P, Si, F, Cl, Br, und I enthalten kann,
a = 0 bis 3,
b = 0 bis 100,
c = 2 bis 12,
d = 0 bis 100,
und die Summe (b + d) = 2 bis 200 ist,
wobei die Reihenfolge der Polyoxyalkylensegmente
(O-C₂H₄₋ₐR³ₐ)_{b} und (O-C_{c}H_{2c})_{d} beliebig ist,
und/oder
d) Polyoxyalkylenverbindungen der allgemeinen Formel
H₂N-R⁵-(O-C₂H₄₋ₐR³ ₐ)_{b}(O-C_{c}H_{2c})_{d}O-R⁶
wobei
R³ gleiche oder verschiedene Alkylreste oder Alkylenreste mit 1 bis 24 Kohlenstoffatomen oder, gegebenenfalls substituierte, Phenylreste mit bis zu 24 Kohlenstoffatomen sind,
R⁵ ein zweiwertiger Alkylenrest mit 2 bis 6 Kohlenstoffatomen ist und
R⁶ ein Wasserstoffrest oder ein gesättigter oder ungesättigter, gegebenenfalls verzweigter oder cyclischer oder aromatischer Kohlenwasserstoffrest mit bis zu 24 Kohlenstoffatomen ist, der gegebenenfalls auch Heteroatome aus der Gruppe O, S, N, P, Si, F, Cl, Br, und I enthalten kann,
a = 0 bis 3,
b = 0 bis 100,
c = 2 bis 12,
d = 0 bis 100,
und die Summe (b + d) = 2 bis 200 ist,
wobei die Reihenfolge der Polyoxyalkylensegmente
(O-C₂H₄₋ₐR³ₐ)_{b} und (O-C_{c}H_{2c})_{d} beliebig ist, umsetzt.

2. Aminoxidgruppen enthaltende Maleinsäureanhydrid-Copolymere nach Anspruch 1, **dadurch gekennzeichnet, daß** das Polymer als Comonomer zumindest ein weiteres, verschiedenes Monomer mit vinylischen Doppelbindungen, vorzugsweise ein Monomer aus der Gruppe Styrol, alkylierte Styrolverbindungen, (Meth)Acrylsäure, (Meth)-Acrylsäureester, Alkylvinylether, Vinylacetat, Itaconsäureester oder Mischungen von Monomeren aus dieser Gruppe enthält.

3. Aminoxidgruppen enthaltende Maleinsäureanhydrid-Copolymere nach Anspruch 2, **dadurch gekennzeichnet, daß** als Comonomer Styrol verwendet wird und das molare Verhältnis Maleinsäureanhydrid zu Styrol zwischen 1 zu 1 und 1 zu 3 liegt.

4. Aminoxidgruppen enthaltende Maleinsäureanhydrid-Copolymere nach den Ansprüchen 1 bis 3, **dadurch gekennzeichnet, daß** es ein gewichtsmäßiges Molekulargewicht M_{W} von 1000 bis 10 0000, vorzugsweise von 2500 bis 50 000 g/Mol aufweist.

5. Aminoxidgruppen enthaltende Maleinsäureanhydrid-Copolymere nach den Ansprüchen 1 bis 4, **dadurch gekennzeichnet, daß** im Polymer vorhandene Carbonsäuregruppen zu Carboxylatsalzen neutralisiert sind.

6. Verwendung der Aminoxidgruppen enthaltenden Maleinsäureanhydrid-Copolymeren gemäß den Ansprüchen 1 bis 5 als Dispergiermittel für Pigmente oder Füllstoffe.

7. Verwendung der Aminoxidgruppen enthaltenden Maleinsäureanhydrid-Copolymeren gemäß den Ansprüchen 1 bis 5 zur Herstellung von Pigmentkonzentraten, wobei das Dispergiermittel zusammen mit den zu dispergierenden Pigmenten und/oder Füllstoffen, gegebenenfalls in Gegenwart von organischen Lösemitteln und/oder Wasser, gegebenenfalls mit Bindemitteln und gegebenenfalls mit üblichen Lackhilfsstoffen homogenisiert wird.

8. Verwendung der Aminoxidgruppen enthaltenden Maleinsäureanhydrid-Copolymeren gemäß den Ansprüchen 1 bis 5 zur Herstellung eines Überzugsmittels, wobei ein Bindemittel, gegebenenfalls ein Lösemittel, Pigmente und/oder Füllstoffe, das Dispergiermittel und gegebenenfalls Hilfsstoffe zusammen dispergiert werden.

## Claims

1. Maleic anhydride copolymers containing amine oxide groups, which are obtainable by reacting at least 1 mol% of the anhydride groups of maleic anhydride copolymers with
a) diamines from the group consisting of
HR¹N-R²-NR³R⁴
where
R¹ is hydrogen or a monovalent hydrocarbon radical having 1 to 24 carbon atoms,
R² is a divalent alkylene radical having 2 to 24 carbon atoms, and
R³ and R⁴ are aliphatic and/or alicyclic alkyl radicals having 1 to 12, preferably 1 to 6, carbon atoms, which can be identical or different
and subsequently carrying out oxidation to give amine oxide groups of the following general formula 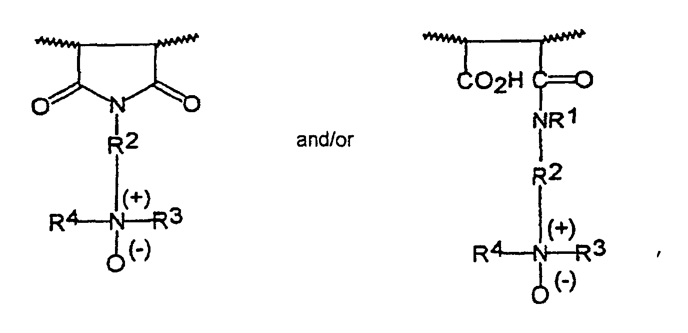 reacting some or all of the remaining anhydride groups with
b) saturated or unsaturated, alicyclic or cyclic alcohols and/or amines of the general formula
HO-R¹ or HR²N-R¹,
respectively,
where
R¹ is a hydrocarbon radical having 2 to 24 carbon atoms, and
R² is hydrogen or a monovalent hydrocarbon radical having 1 to 24 carbon atoms,
and/or
c) polyoxyalkylene compounds of the general formula
H- (O-C₂H₄₋ₐR³ ₐ)_{b}(O-C_{c}H_{2c})_{d}O-R⁴,
where
R³ are identical or different alkyl radicals or alkylene radicals having 1 to 24 carbon atoms or are substituted or unsubstituted phenyl radicals having up to 24 carbon atoms, and
R⁴ is hydrogen or a saturated or unsaturated, optionally branched or cyclic or aromatic hydrocarbon radical having up to 24 carbon atoms, which can, if desired, also include heteroatoms from the group consisting of O, S, N, P, Si, F, Cl, Br, and I,
a = 0 to 3,
b = 0 to 100,
c = 2 to 12,
d = 0 to 100,
and the sum (b + d) = 2 to 200,
the sequence of the polyoxyalkylene segments
(O-C₂H₄₋ₐR³ₐ)_{b} and (O-C_{c}H_{2c})_{d} being arbitrary,
and/or
d) polyoxyalkylene compounds of the general formula
H₂N-R⁵-(O-C₂H₄₋ₐR³ ₐ)_{b}(O-C_{c}H_{2c})_{d}O-R⁶,
where
R³ are identical or different alkyl radicals or alkylene radicals having 1 to 24 carbon atoms or are substituted or unsubstituted phenyl radicals having up to 24 carbon atoms,
R⁵ is a divalent alkylene radical having 2 to 6 carbon atoms, and
R⁶ is hydrogen or a saturated or unsaturated, optionally branched or cyclic or aromatic hydrocarbon radical having up to 24 carbon atoms, which can, if desired, also include heteroatoms from the group consisting of O, S, N, P, Si, F, Cl, Br, and I,
a = 0 to 3,
b = 0 to 100,
c = 2 to 12,
d = 0 to 100,
and the sum (b + d) = 2 to 200,
the sequence of the polyoxyalkylene segments (O-C₂H₄₋ₐR³ₐ)_{b} and (O-C_{c}H_{2c})_{d} being arbitrary.

2. Maleic anhydride copolymers containing amine oxide groups according to Claim 1, **characterized in that** the polymer comprises as comonomer at least one further, different monomer having vinylic double bonds, preferably a monomer selected from the group consisting of styrene, alkylated styrene compounds, (meth)acrylic acid, (meth)acrylic esters, alkyl vinyl ethers, vinyl acetate, and itaconic esters or mixtures of monomers from this group.

3. Maleic anhydride copolymers containing amine oxide groups according to Claim 2, **characterized in that** styrene is used as comonomer and the molar ratio of maleic anhydride to styrene is between 1:1 and 1:3.

4. Maleic anhydride copolymers containing amine oxide groups according to Claims 1 to 3, **characterized in that** it has a weight-based molecular weight M_{w} of from 1000 to 100,000, preferably from 2500 to 50,000, g/mol.

5. Maleic anhydride copolymers containing amine oxide groups according to Claims 1 to 4, **characterized in that** carboxylic acid groups present in the polymer have been neutralized to carboxylate salts.

6. Use of the maleic anhydride copolymers containing amine oxide groups according to Claims 1 to 5 as a dispersant for pigments or fillers.

7. Use of the maleic anhydride copolymers containing amine oxide groups according to Claims 1 to 5 for preparing pigment concentrates, the dispersant being homogenized together with the pigments and/or fillers to be dispersed, if desired in the presence of organic solvents and/or water, if desired with binders and, if desired, with customary coating auxiliaries.

8. Use of the maleic anhydride copolymers containing amine oxide groups according to Claims 1 to 5 for preparing a coating composition, a binder being dispersed together, if desired, with a solvent, with pigments and/or fillers, with the dispersant and, if desired, with auxiliaries.

## Revendications

1. Copolymères de l'anhydride de l'acide maléique contenant des groupements aminoxyde, pouvant être obtenus en ce qu'on transforme au moins 1% en mole des groupements anhydride des copolymères de l'anhydride de l'acide maléique avec
a) des diamines du groupe
HR¹N-R²-NR³R⁴
où
R¹ représente un radical hydrogène ou un radical hydrocarboné monovalent comprenant 1 à 24 atomes de carbone,
R² représente un radical alkylène divalent comprenant 2 à 24 atomes de carbone et
R³ et R⁴ représentent des radicaux alkyle aliphatiques et/ou alicycliques comprenant 1 à 12, de préférence 1 à 6 atomes de carbone, qui peuvent être identiques ou différents
et que l'on oxyde ensuite en groupements aminoxyde de formule générale 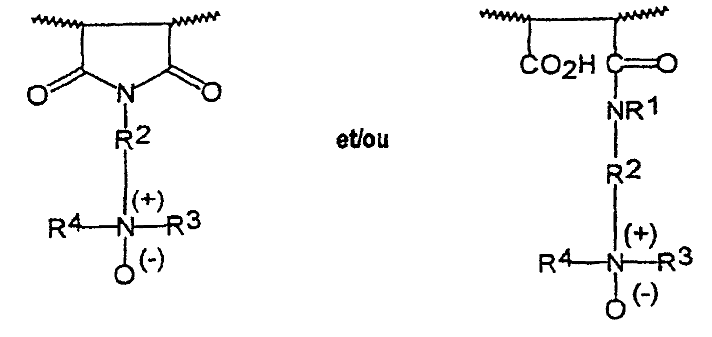 on transforme les groupements anhydride résiduels totalement ou partiellement avec
b) des alcools et/ou des amines alicycliques ou cycliques, saturés ou insaturés de formule générale
HO-R¹ ou, selon le cas, HR²N-R¹
où
R¹ représente un radical hydrocarboné comprenant 2 à 24 atomes de carbone et
R² représente un radical hydrogène ou un radical hydrocarboné monovalent comprenant 1 à 24 atomes de carbone
et/ou
c) des composés polyoxyalkylène de formule générale
H- (O-C₂H₄₋ₐR³ ₐ)_{b}(O-C_{c}H_{2c})_{d}O-R⁴
où
R³ représente des radicaux alkyle ou alkylène identiques ou différents comprenant 1 à 24 atomes de carbone ou des radicaux phényle, le cas échéant substitués, comprenant jusqu'à 24 atomes de carbone et
R⁴ représente un radical hydrogène ou un radical hydrocarboné saturé ou insaturé, le cas échéant ramifié
ou cyclique ou aromatique comprenant jusqu'à 24 atomes de carbone, qui peut le cas échéant également contenir des hétéroatomes du groupe O, S, N, P, Si, F, Cl, Br, et I,
a = 0 à 3,
b = 0 à 100,
c = 2 à 12,
d = 0 à 100,
et la somme (b + d) = 2 à 200,
l'ordre des segments polyoxyalkylène (O-C₂H₄₋ₐR³ₐ)_{b} et (O-C_{c}H_{2c})_{d} étant quelconque,
et/ou
d) des composés polyoxyalkylène de formule générale
H₂N-R⁵-(O-C₂H₄₋ₐR³ ₐ)_{b}(O-C_{c}H_{2c})_{d}O-R⁶
où
R³ représente des radicaux alkyle ou alkylène identiques ou différents comprenant 1 à 24 atomes de carbone ou des radicaux phényle, le cas échéant substitués, comprenant jusqu'à 24 atomes de carbone,
R⁵ représente un radical alkylène divalent comprenant 2 à 6 atomes de carbone et
R⁶ représente un radical hydrogène ou un radical hydrocarboné saturé ou insaturé, le cas échéant ramifié
ou cyclique ou aromatique comprenant jusqu'à 24 atomes de carbone, qui peut le cas échéant également contenir des hétéroatomes du groupe O, S, N, P, Si, F, Cl, Br et I,
a = 0 à 3,
b = 0 à 100,
c = 2 à 12,
d = 0 à 100,
et la somme (b + d) = 2 à 200,
l'ordre des segments polyoxyalkylène (O-C₂H₄₋ₐR³ₐ)_{b} et (O-C_{c}H_{2c})_{d} étant quelconque.

2. Copolymères de l'anhydride de l'acide maléique contenant des groupements aminoxyde selon la revendication 1, **caractérisés en ce que** le polymère contient comme comonomère au moins un autre monomère différent avec des doubles liaisons vinyle, de préférence un monomère du groupe styrène, composés alkylés du styrène, acide (méth)acrylique, esters de l'acide (méth)acrylique, alkylvinyléthers, acétate de vinyle, esters de l'acide itaconique ou des mélanges de monomères de ce groupe.

3. Copolymères de l'anhydride de l'acide maléique contenant des groupements aminoxyde selon la revendication 2, **caractérisés en ce qu'**on utilise le styrène comme comonomère et le rapport molaire anhydride de l'acide maléique à styrène est compris entre 1:1 et 1:3.

4. Copolymères de l'anhydride de l'acide maléique contenant des groupements aminoxyde selon les revendications 1 à 3, **caractérisés en ce qu'**ils présentent un poids moléculaire pondéral M_{w} de 1000 à 100000, de préférence de 2500 à 50000 g/mole.

5. Copolymères de l'anhydride de l'acide maléique contenant des groupements aminoxyde selon les revendications 1 à 4, **caractérisés en ce que** des groupements acide carboxylique présents dans le polymère sont neutralisés en sels carboxylate.

6. Utilisation des copolymères de l'anhydride de l'acide maléique contenant des groupements aminoxyde selon les revendications 1 à 5 comme dispersant pour des pigments ou des charges.

7. Utilisation des copolymères de l'anhydride de l'acide maléique contenant des groupements aminoxyde selon les revendications 1 à 5 pour la préparation de concentrats de pigments, le dispersant étant homogénéisé avec les pigments et/ou les charges à disperser, le cas échéant en présence de solvants organiques et/ou d'eau, le cas échéant avec des liants et le cas échéant avec des adjuvants usuels de laques.

8. Utilisation des copolymères de l'anhydride de l'acide maléique contenant des groupements aminoxyde selon les revendications 1 à 5 pour la préparation d'un revêtement en dispersant ensemble un liant, le cas échéant un solvant, des pigments et/ou des charges, le dispersant et le cas échéant des adjuvants.
